# EUROPÄISCHE PATENTSCHRIFT

(11) **EP 1 016 316 B1**
(45) Veröffentlichungstag und Bekanntmachung des Hinweises auf die Patenterteilung: **05.06.2002**
(21) Anmeldenummer: 98946252.8
(22) Anmeldetag: 31.07.1998
(51) Int. Cl.: H04R 5/033, H04B 10/10, H04B 5/00, H04B 1/20

(54) **VERFAHREN ZUR DRAHTLOSEN ÜBERTRAGUNG VON AUDIOSIGNALEN, AUDIOGERÄT UND TONWIEDERGABEVORRICHTUNG**
METHOD OR WIRELESS TRANSMISSION OF AUDIO SIGNALS, AUDIO EQUIPMENT AND AUDIO PLAYBACK DEVICE
PROCEDE DE TRANSMISSION SANS FIL DE SIGNAUX AUDIO, APPAREIL AUDIO ET DISPOSITIF DE REPRODUCTION SONORE

(30) Priorität: 20.09.1997 DE 19741595
(43) Veröffentlichungstag der Anmeldung: 05.07.2000
(73) Patentinhaber: ROBERT BOSCH GMBH, 70442 Stuttgart (DE)
(72) Erfinder: CORDING, Karl-Heinz, D-31134 Hildesheim (DE)
(86) Internationale Anmeldenummer: DE9802206
(87) Internationale Veröffentlichungsnummer: WO9916287

(56) Entgegenhaltungen:
- EP-A- 0 613 320
- US-A- 4 845 751
- US-A- 5 551 065
- US-A- 5 666 658

## Beschreibung

### Stand der Technik

Die Erfindung geht von einem Verfahren zur drahtlosen Übertragung von Audiosignalen, einem Audiogerät und einer Tonwiedergabevorrichtung nach der Gattung der unabhängigen Ansprüche aus.

Aus der Zeitschrift Bosch-Zünder, 75. Jahrgang, Nr. 10* ist bereits ein Kopfhörer bekannt, der einen Infrarot-Empfänger aufweist, über den drahtlos übertragene Audiosignale empfangbar sind.

Es sind außerdem Autoradios bekannt, die verschiedene Audiosignalquellen, wie einen Compact-Disc-Spieler und ein Kassettenabspielgerät aufweisen. Dabei kann für die Tonwiedergabe zwischen den verschiedenen Audiosignalquellen umgeschaltet werden.

Aus der US 4 845 751 ist ein drahtloser Stereokopfhörer bekannt, der es einem Benutzer ermöglicht, ein Stereoprogramm zu hören, das. von einem herkömmlichen Empfänger/Verstärker ohne die Verwendung von Verbindungskabeln empfangen wird. Ein im Kopfhörer angeordneter Sender ermöglicht es dem Benutzer ferngesteuert eine Rundfunkstation am Empfänger auszuwählen.

### Vorteile der Erfindung

Das erfindungsgemäße Verfahren mit den Merkmalen des unabhängigen Anspruchs 1 hat demgegenüber den Vorteil, daß eine gewünschte Audiosignalquelle, deren Audiosignale vom Audiogerät an die davon abgesetzte Tonwiedergabevorrichtung übertragen werden, an der Tonwiedergabevorrichtung ausgewählt werden kann. Auf diese Weise wird eine größere räumliche Unabhängigkeit bei der Auswahl der gewünschten Audiosignalquelle ermöglicht, da diese nicht am Audiogerät selbst eingestellt werden muß, so daß für den Benutzer ein erhöhter Bedienkomfort erzielt wird. Dies ist besonders bei Verwendung eines Kopfhörers als Tonwiedergabevorrichtung von Vorteil, da der Benutzer für die Auswahl die gewünschten Audiosignalquelle und mitgeführtem Kopfhörer seinen Standort nicht zu wechseln braucht.

Durch die in den abhängigen Ansprüchen 2 bis 4 aufgeführten Maßnahmen sind vorteilhafte Weiterbildungen und Verbesserungen des im unabhängigen Anspruch 1 angegebenen Verfahrens möglich.

Besonders vorteilhaft ist dabei, daß die Signale und/oder die Audiosignale über Funk zwischen der mindestens einen Audiosignalquelle und der Tonwiedergabevorrichtung übertragen werden. Auf diese Weise wird die Übertragung der Signale bzw. der Audiosignale zwischen der mindestens einen Audiosignalquelle und der Tonwiedergabevorrichtung besonders störungs- und unterbrechungsfrei gewährleistet, da im Gegensatz zur optischen Übertragung der Signale bzw. der Audiosignale eine Unterbrechung des optischen Signalwegs unerheblich ist.

Ein weiterer Vorteil besteht darin, daß in Abhängigkeit der in den Signalen enthaltenen Informationen eine Lautstärke und/oder Klangeigenschaften für die vom weiteren Sender abzustrahlenden Audiosignale vorgegeben werden. Auf diese Weise wird der Bedienkomfort für den Benutzer weiter erhöht, da er neben der Audiosignalquelle weitere Einstellungen direkt an der Tonwiedergabevorrichtung wählen kann und diese Einstellungen nicht am Audiogerät selbst vornehmen muß.

Das erfindungsgemäße Audiogerät mit den Merkmalen des unabhängigen Anspruchs 5 hat den Vorteil, daß Audiosignale drahtlos an Tonwiedergabevorrichtungen abstrahlbar sind, so daß entsprechende Kabelverbindungen, die teuer und zudem störend sind, eingespart werden können.

Ein weiterer Vorteil besteht darin, daß die Audiosignalquelle der vom Sender abzustrahlenden Audiosignale durch Fernbedienung ausgewählt werden kann, so daß der Bedienkomfort für den Benutzer erhöht wird.

Durch die in den abhängigen Ansprüchen 6 bis 11 aufgeführten Maßnahmen sind vorteilhafte Weiterbildungen und Verbesserungen des im unabhängigen Anspruch 5 angegebenen Audiogerätes möglich.

Besonders vorteilhaft ist es, daß mindestens eine weitere Schaltvorrichtung und eine Tonwiedergabevorrichtung vorgesehen sind und daß die Tonwiedergabevorrichtung über die weitere Schaltvorrichtung an jeweils eine der Audiosignalquellen anschließbar ist. Auf diese Weise besteht die Möglichkeit, für die Abstrahlung von Audiosignalen am Sender und für die Wiedergabe von Audiosignalen an der Tonwiedergabevorrichtung voneinander unabhängige Quellen vorzusehen, so daß gleichzeitig über die Tonwiedergabevorrichtung des Audiogerätes und eine vom Audiogerät abgesetzte Tonwiedergabevorrichtung, die die vom Sender abgestrahlten Audiosignale empfängt, verschiedene Audiosignalquellen wiedergegeben werden können. Dies ist vor allem bei Verwendung eines Kopfhörers für die von dem Audiogerät abgesetzte Tonwiedergabevorrichtung von Vorteil, da das Audiogerät somit gleichzeitig von verschiedenen Benutzern mit verschiedenen Audiosignalquellen betrieben werden kann, ohne daß die Benutzer von der jeweils anderen Audiosignalquelle gestört werden.

Vorteilhaft ist weiterhin, daß ein erster dem Sender vorgeschalteter Klangsteller vorgesehen ist und daß der Empfänger ein von den in den empfangenen Signalen enthaltenen Informationen abgeleitetes Signal an den ersten Klangsteller abgibt, mittels dem durch den ersten Klangsteller eine Einstellung einer Lautstärke und/oder von Klangeigenschaften der vom Sender abzustrahlenden Audiosignale erfolgt. Auf diese Weise ist auch eine Fernbedienung der vom Sender abzustrahlenden Audiosignale bezüglich ihrer Lautstärke und/oder Klangeigenschaften möglich, so daß der Bedienkomfort für den Benutzer weiter erhöht wird.

Besonders vorteilhaft ist es, daß der Sender und/oder der Empfänger in einem Funkfrequenzbereich betreibbar sind. Auf diese Weise ist die Fernbedienung des Audiogerätes und die Abstrahlung von Audiosignalen besonders störungs- und unterbrechungsfrei gewährleistet, da im Gegensatz zu einer optischen Datenübertragung eine Unterbrechung des optischen Übertragungsweges für die Funkübertragung unerheblich ist.

Die erfindungsgemäße Tonwiedergabevorrichtung mit den Merkmalen des unabhängigen Anspruchs 12 hat den Vorteil, daß die Tonwiedergabevorrichtung zusätzlich zur Tonwiedergabefunktion eine Fernbedienung zur Auswahl einer Audiosignalquelle ermöglicht. Auf diese Weise wird vor allem bei Ausbildung der Tonwiedergabevorrichtung als Kopfhörer der Bedienkomfort für den Benutzer erheblich erhöht, da der Benutzer die gewünschte Audiosignalquelle nicht am entsprechenden Audiogerät einstellen muß, sondern innerhalb der Reichweite des Senders unabhängig von seinem Standort und ohne Veränderung seines Standorts die gewünschte Audiosignalquelle auswählen kann.

Durch die in den abhängigen Ansprüchen 13 bis 16 aufgeführten Maßnahmen sind vorteilhafte Weiterbildungen und Verbesserungen der im unabhängigen Anspruch 12 angegebenen Tonwiedergabevorrichtung möglich.

Besonders vorteilhaft ist es, daß an der Bedienvorrichtung Lautstärke- und Klangeinstellungen der zu empfangenden Audiosignale auswählbar sind und daß das von dem Sender abstrahlbare Signal Informationen über die an der Bedienvorrichtung ausgewählten Lautstärke- und Klangeinstellungen enthält. Auf diese Weise wird die Funktionalität der Tonwiedergabevorrichtung bzw. deren Fernbedienungsteile weiter erhöht, da neben der Auswahl der Audiosignalquelle weitere Einstellungen von der Tonwiedergabevorrichtung aus vorgenommen werden können. Auf diese Weise wird auch der Bedienkomfort für den Benutzer weiter erhöht.

Ein weiterer Vorteil besteht darin, daß der Sender und/oder der Empfänger in einem Funkfrequenzbereich betreibbar sind. Auf diese Weise wird die Datenübertragung zum und/oder vom entsprechenden Audiogerät besonders stör- und unterbrechungssicher, da im Gegensatz zu einer optischen Datenübertragung eine Unterbrechung des optischen Übertragungsweges unerheblich ist.

Ein weiterer Vorteil besteht darin, daß die Bedienvorrichtung von der Tonwiedergabevorrichtung absetzbar ist. Auf diese Weise wird wiederum der Bedienkomfort für den Benutzer erhöht, vor allem bei für den Benutzer nicht allzu leicht zugänglicher Tonwiedergabevorrichtung, wie dies auch bei Kopfhörern der Fall ist. In diesem Fall läßt sich die Bedienvorrichtung zur Fernbedienung der an die Tonwiedergabevorrichtung abzustrahlenden Audiosignale bequem in die Hand nehmen.

### Zeichnung

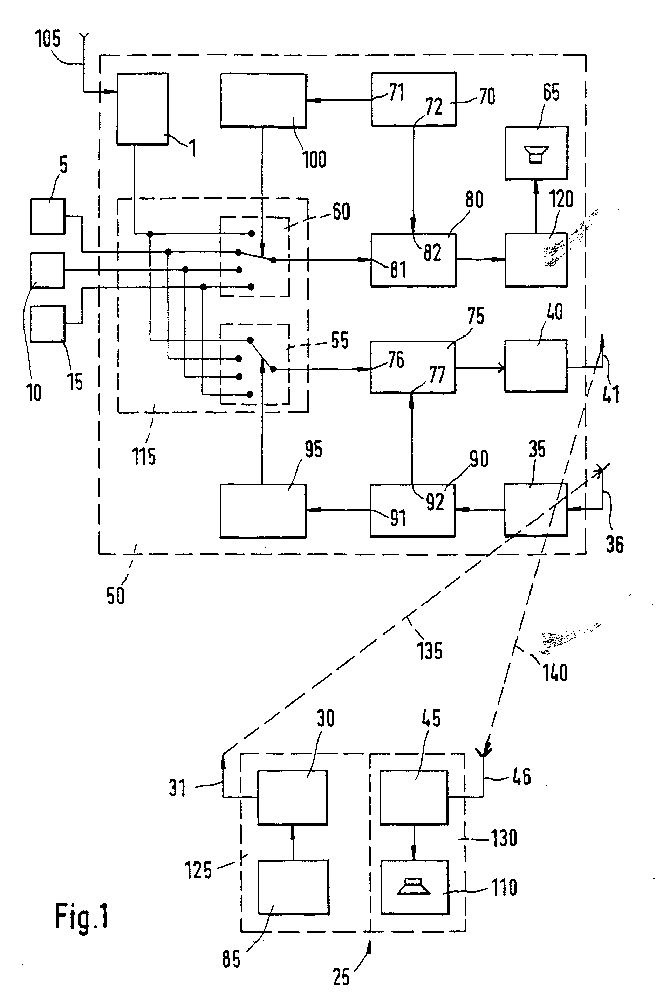

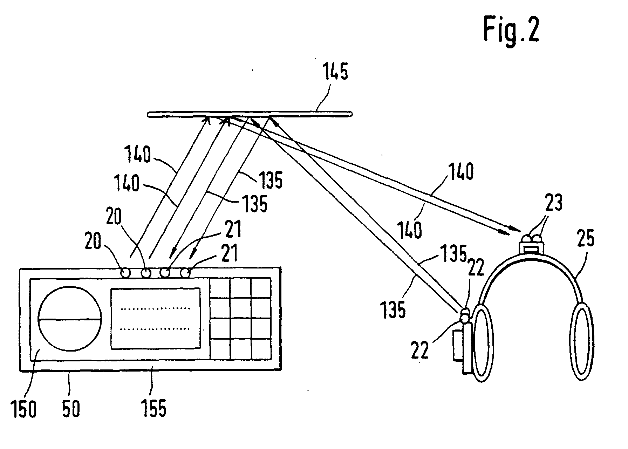

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Audiogerätes und einer erfindungsgemäßen Tonwiedergabevorrichtung und Figur 2 ein als Autoradio ausgebildetes Audiogerät und eine als Kopfhörer ausgebildete Tonwiedergabevorrichtung innerhalb eines Kraftfahrzeuges.

### Beschreibung des Ausführungsbeispiels

In Figur 1 kennzeichnet 50 ein als Autoradio ausgebildetes Audiogerät mit einem Rundfunkempfangsteil 1, dem über eine Rundfunkempfangsantenne 105 Rundfunksignale zuführbar sind. An das Autoradio 50 sind ein Compact-Disc-Abspielgerät 5, ein Kassettenabspielgerät 10 und ein Funktelefon 15 angeschlossen. Das Autoradio 50 umfaßt eine Schalteranordnung 115 mit einer ersten Schaltvorrichtung 55 und einer zweiten Schaltvorrichtung 60. Über die erste Schaltvorrichtung 55 ist entweder das Rundfunkempfangsteil 1, das Compact-Disc-Abspielgerät 5, das Kassettenabspielgerät 10 oder das Funktelefon 15 mit einem ersten Eingang 76 eines ersten Klangstellers 75 verbindbar. Über die zweite Schaltvorrichtung 60 ist entweder das Rundfunkempfangsteil 1, das Compact-Disc-Abspielgerät 5, das Kassettenabspielgerät 10 oder das Funktelefon 15 mit einem ersten Eingang 81 eines zweiten Klangstellers 80 verbindbar. Ein Ausgang des ersten Klangstellers 75 ist mit einem Eingang eines ersten Senders 40 verbunden, bei dem an einem Ausgang eine erste Sendeantenne 41 angeschlossen ist. Ein Ausgang des zweiten Klangstellers 80 ist an einen Eingang eines NF-Verstärkers 120 angeschlossen. Über einen Ausgang ist der NF-Verstärker 120 mit einer beispielsweise als Lautsprecherpaar ausgebildeten ersten Tonwiedergabevorrichtung 65 verbunden. Über eine erste Empfangsantenne 36 ist einem ersten Empfänger 35 des Autoradios 50 ein Funkempfangssignal zuführbar. Ein Ausgang des ersten Empfängers 35 ist mit einem Eingang eines Decoders 90 verbunden. Ein erster Ausgang 91 des Decoders 90 ist mit einem Eingang eines ersten Umschalters 95 verbunden. Der erste Umschalter 95 weist einen Ausgang auf, über den er ein Signal zur Einstellung einer Schalterstellung der ersten Schaltvorrichtung 55 abgeben kann. Ein zweiter Ausgang 92 des Decoders 90 ist mit einem zweiten Eingang 77 des ersten Klangstellers 75 verbunden. Das Autoradio 50 umfaßt weiterhin ein Bedienteil 70. Ein erster Ausgang 71 des Bedienteils 70 ist mit einem Eingang eines zweiten Umschalters 100 verbunden. Der zweite Umschalter 100 umfaßt einen Ausgang, über den er ein Signal zur Einstellung einer Schalterstellung der zweiten Schaltvorrichtung 60 abgeben kann. Ein zweiter Ausgang 72 des Bedienteils 70 ist mit einem zweiten Eingang 82 des zweiten Klangstellers 80 verbunden.

Vom Autoradio 50 abgesetzt zeigt Figur 1 eine zweite Tonwiedergabevorrichtung 25, die in diesem Beispiel als Kopfhörer ausgebildet ist, jedoch auch einen oder mehrere nicht in einem Kopfhörer angeordnete Lautsprecher umfassen kann. Der Kopfhörer 25 umfaßt eine Fernbedienung 125 und eine Empfangs- und Wiedergabeeinheit 130. Die Fernbedienung 125 umfaßt eine Bedienvorrichtung 85 und einen zweiten Sender 30. Ein Ausgang der Bedienvorrichtung 85 ist mit einem Eingang des zweiten Senders 30 verbunden. Eine zweite Sendeantenne 31 ist mit einem Ausgang des zweiten Senders 30 verbunden. Die Empfangs- und Wiedergabeeinheit 130 umfaßt eine Lautsprechereinheit 110 und einen zweiten Empfänger 45. Eine zweite Empfangsantenne 46 ist mit einem Eingang des zweiten Empfängers 45 verbunden. Ein Ausgang des zweiten Empfängers 45 ist mit einem Eingang der Lautsprechereinheit 110 verbunden. Die Lautsprechereinheit 110 umfaßt dabei beispielsweise ein Lautsprecherpaar. Die Fernbedienung 125 ist von der Empfangs- und Wiedergabeeinheit 130 absetzbar, das heißt die Fernbedienung 125 kann von der Empfangs- und Wiedergabeeinheit 130 zur leichteren Bedienung abgenommen werden.

Die Funktionsweise der erfindungsgemäßen Anordnung gemäß Figur 1 ist im folgenden beschrieben. An der Bedienvorrichtung 85 kann der Benutzer die von ihm zur Wiedergabe über die Lautsprechereinheit 110 gewünschte Audiosignalquelle vorgeben, das heißt er wählt entweder das Rundfunkempfangsteil 1, das Compact-Disc-Abspielgerät 5, das Kassettenabspielgerät 10 oder das Funktelefon 15. Die Erfindung ist dabei nicht auf die beschriebenen Audiosignalquellen beschränkt, diese sind nur beispielhaft aufgeführt. Der Benutzer kann an der Bedienvorrichtung 85 außerdem die Lautstärke und die Klangeinstellung des an der Lautsprechereinheit 110 wiederzugebenden Audiosignals vorgeben. Im zweiten Sender 30 wird ein entsprechendes Sendesignal erzeugt, das Informationen über die gewünschte Audiosignalquelle 1, 5, 10, 15 und die gewählten Lautstärkeund Klangeinstellungen in vorzugsweise codierter Form enthält. Das entsprechende Signal ist in Figur 1 mit dem Bezugszeichen 135 gekennzeichnet und wird von der zweiten Sendeantenne 31 an die erste Empfangsantenne 36 abgestrahlt. Vom ersten Empfänger 35 wird das empfangene Signal an den Decoder 90 weitergeleitet, der aus den Informationen des empfangenen Signals ein erstes Signal für die Einstellung der gewünschten Audiosignalquelle 1, 5, 10, 15 und ein zweites Signal für die Einstellung der gewünschten Lautstärke- und Klangeinstellungen ableitet. Das erste Signal gibt der Decoder 90 an den ersten Umschalter 95, der daraufhin über die entsprechende Schalterstellung der ersten Schaltvorrichtung 55 die gewünschte Audiosignalquelle 1, 5, 10, 15 mit dem ersten Eingang 76 des ersten Klangstellers 75 verbindet. Über das zweite Signal veranlaßt der Decoder 90 den ersten Klangsteller 75 dazu, dem von der gewünschten Audiosignalquelle 1, 5, 10, 15 gelieferten Audiosignal die gewünschte Lautstärke und die gewünschten Klangeinstellungen zu geben. Das entsprechend aufbereitete Audiosignal wird dann an den ersten Sender 40 zur Abstrahlung über die erste Sendeantenne 41 weitergeleitet. Gemäß Figur 1 wird das von der ersten Sendeantenne 41 abgestrahlte Audiosignal mit dem Bezugszeichen 140 gekennzeichnet.und von der zweiten Empfangsantenne 46 empfangen. Vom zweiten Empfänger 45 wird das empfangene Audiosignal 140 an die Lautsprechereinheit 110 zur akustischen Wiedergabe weitergeleitet. Gemäß dem Ausführungsbeispiel nach Figur 1 erfolgt die Übertragung des Signals 135 von der zweiten Sendeantenne 31 zur ersten Empfangsantenne 36 und die Übertragung des Audiosignals 140 von der ersten Sendeantenne 41 zur zweiten Empfangsantenne 46 in einem Funkfrequenzbereich oberhalb des empfangbaren Rundfunkfrequenzbereichs.

Auch am Bedienteil 70 können eine gewünschte Audiosignalquelle 1, 5, 10, 15 und Lautstärke- und Klangeinstellungen vorgegeben werden. Entsprechend der am Bedienteil 70 gewählten Audiosignalquelle 1, 5, 10, 15 wird am ersten Ausgang 71 ein Signal abgegeben, das den zweiten Umschalter 100 zur Einstellung derjenigen Schalterstellung der zweiten Schaltvorrichtung 60 veranlaßt, die die gewünschte Audiosignalquelle 1, 5, 10, 15 mit dem ersten Eingang 81 des zweiten Klangstellers 80 verbindet. Das entsprechende Audiosignal der so gewählten Audiosignalquelle 1, 5, 10, 15 wird somit dem zweiten Klangsteller 80 zugeführt. Über den zweiten Ausgang 72 des Bedienteils 70 wird dem zweiten Klangsteller 80 ein Signal zugeführt, das den zweiten Klangsteller 80 dazu veranlaßt, das von der gewünschten Audiosignalquelle 1, 5, 10, 15 empfangene Audiosignal mit der gewünschten Lautstärke und den gewünschten Klangeinstellungen an den NF-Verstärker 120 zur Weiterleitung an die erste Tonwiedergabevorrichtung 65 abzugeben.

Auf diese Weise lassen sich über die Lautsprechereinheit 110 und die erste Tonwiedergabevorrichtung 65 gleichzeitig und unabhängig voneinander Audiosignale von verschiedenen Audiosignalquellen 1, 5, 10, 15 wiedergeben.

Alternativ zur beschriebenen Lautstärke- und Klangeinstellung über die Bedienvorrichtung 85 kann auch vorgesehen sein, zwischen den zweiten Empfänger 45 und die Lautsprechereinheit 110 einen Klangsteller anzuordnen und mit der Bedienvorrichtung 85 zu verbinden. So könnten die an der Bedienvorrichtung 85 gewählten Lautstärke- und Klangeinstellungen direkt in der Empfangs- und Wiedergabeeinheit 130 umgesetzt werden, so daß der erste Klangsteller 75 des Autoradios 50 nicht benötigt würde. Falls erforderlich, könnte der Lautsprechereinheit 110 auch noch ein NF-Verstärker vorgeschaltet werden.

Eine weitere Möglichkeit zur Klangeinstellung besteht auch darin, dem Audiosignal im ersten Klangsteller 75 Informationen beispielsweise digital über die gewünschten Lautstärke- und Klangeinstellungen aufzuprägen und diese Informationen nach Empfang im zweiten Empfänger 45 zur Einstellung von Lautstärke und Klang an der Lautsprechereinheit 110 zu verwenden.

In Figur 2 ist eine Bedienfront 150 des Autoradios 50 dargestellt. Dabei sind an einer Umrandung 155 der Bedienfront 150 zwei Infrarotsender 20 und zwei Infrarotempfänger 21 angeordnet. Figur 2 zeigt außerdem die Kopfhörer 25, die zwei Infrarotsender 22 und zwei Infrarotempfänger 23 aufweisen. Anstelle der gemäß dem Ausführungsbeispiel von Figur 1 beschriebenen Datenübertragung in einem Funkfrequenzbereich kann die Datenübertragung gemäß dem Ausführungsbeispiel nach Figur 2 alternativ auch in einem optischen Frequenzbereich, beispielsweise dem Infrarotfrequenzbereich, erfolgen. Es ist auch denkbar, andere optische Frequenzbereiche als den Infrarotfrequenzbereich zur Datenübertragung zu verwenden. Durch die Verwendung von jeweils zwei Infrarotsendern 20, 22 und zwei Infrarotempfängern 21, 23 werden mehrere optische Übertragungswege zur Verfügung gestellt, so daß bei Unterbrechung eines optischen Übertragungsweges immer noch Daten über alternative optische Übertragungswege ausgetauscht werden können. Dabei sind in Figur 2 wieder die von den Infrarotsendern 22 der Kopfhörer 25 abgestrahlten Signale 135 mit den Informationen über die gewünschte Audiosignalquelle 1, 5, 10, 15 und die gewünschten Lautstärke- und Klangeinstellungen und die von den Infrarotsendern 20 des Autoradios 50 abgestrahlten Audiosignale 140 dargestellt. Dabei ist in Figur 2 dargestellt, daß die jeweiligen Übertragungswege durch Reflexion an einem Fahrzeugdach 145 gebildet werden. Dazu kann das Fahrzeugdach 145 gegebenenfalls partiell beschichtet sein, um bessere Reflexionseigenschaften aufzuweisen. Auf diese Weise sind bei Unterbringung des Autoradios 50 und der Kopfhörer 25 in einem Kraftfahrzeug eine große Anzahl von möglichen optischen Übertragungswegen realisierbar. Auch andere Begrenzungen des Fahrzeuginnenraums können entsprechende Reflexionsflächen für die Übertragung der Signale bilden.

## Patentansprüche

1. Verfahren zur drahtlosen Übertragung von Audiosignalen zwischen mindestens einer Audiosignalquelle (1, 5, 10, 15) eines Audiogerätes (50) und einer vom Audiogerät (50) abgesetzten Tonwiedergabevorrichtung (25), wobei von einem Sender (30) der Tonwiedergabevorrichtung (25) Signale an einen Empfänger (35) des Audiogerätes (50) abgestrahlt werden, **dadurch gekennzeichnet, daß** in Abhängigkeit der in den Signalen enthaltenen Informationen die mindestens eine Audiosignalquelle (1, 5, 10, 15) mit einem weiteren Sender (40) verbunden wird und daß die Audiosignale der mindestens einen Audiosignalquelle (1, 5, 10, 15) vom weiteren Sender (40) an einen Empfänaer (45) der Tonwiedergabevorrichtung (25) abgestrahlt werden.

2. Verfahren nach Anspruch 1, **dadurch gekennzeichnet, daß** die Signale und/oder die Audiosignale optisch, vorzugsweise im Infrarot-Bereich, zwischen der mindestens einen Audiosignalquelle (1, 5, 10, 15) und der Tonwiedergabevorrichtung (25) übertragen werden.

3. Verfahren nach Anspruch 1, **dadurch gekennzeichnet, daß** die Signale und/oder die Audiosignale über Funk zwischen der mindestens einen Audiosignalquelle (1, 5, 10, 15) und der Tonwiedergabevorrichtung (25) übertragen werden.

4. Verfahren nach einem der Ansprüche 1, 2 oder 3, **dadurch gekennzeichnet, daß** in Abhängigkeit der in den Signalen enthaltenen Informationen eine Lautstärke und/oder Klangeigenschaften für die vom weiteren Sender (40) abzustrahlenden Audiosignale vorgegeben werden.

5. Audiogerät (50), vorzugsweise Autoradio, zur Durchführung des Verfahrens nach einem der Ansprüche 1 bis 4, mit einer Schaltvorrichtung (55) und Audiosignalquellen (1, 5, 10, 15), **dadurch gekennzeichnet, daß** ein Sender (40) vorgesehen ist, daß über die Schaltvorrichtung (55) jeweils eine der Audiosignalquellen (1, 5, 10, 15) mit dem Sender (40) verbindbar ist, so daß die Audiosignale dieser Audiosignalquelle (1, 5, 10, 15) vom Sender (40) abstrahlbar sind und daß ein Empfänger (35) vorgesehen ist, der in Abhängigkeit von in empfangenen Signalen enthaltenen Informationen eine Schalterstellung der Schaltvorrichtung (55) einstellt.

6. Audiogerät (50) nach Anspruch 5,**dadurch gekennzeichnet, daß** mindestens eine weitere Schaltvorrichtung (60) und eine Tonwiedergabevorrichtung (65) vorgesehen sind und daß die Tonwiedergabevorrichtung (65) über die weitere Schaltvorrichtung (60) an jeweils eine der Audiosignalquellen (1, 5, 10, 15) anschließbar ist.

7. Audiogerät (50) nach Anspruch 5 oder 6, **dadurch gekennzeichnet, daß** ein Bedienteil (70) vorgesehen ist, an dem eine Einstellung der Schalterstellung der weiteren Schaltvorrichtung (60) erfolgt.

8. Audiogerät nach Anspruch 5, 6 oder 7, **dadurch gekennzeichnet, daß** ein erster dem Sender (40) vorgeschalteter Klangsteller (75) vorgesehen ist und daß der Empfänger (35) ein von den in den empfangenen Signalen enthaltenen Informationen abgeleitetes Signal an den ersten Klangsteller (75) abgibt, mittels dem durch den ersten Klangsteller (75) eine Einstellung einer Lautstärke und/oder von Klangeigenschaften der vom Sender (40) abzustrahlenden Audiosignale erfolgt.

9. Audiogerät (50) nach einem der Ansprüche 5 bis 8, **dadurch gekennzeichnet, daß** ein zweiter der Tonwiedergabevorrichtung (65) vorgeschalteter Klangsteller (80) vorgesehen ist und daß das Bedienteil (70) ein von am Bedienteil (70) vorgegebenen Lautstärke- und Klangeinstellungen abhängiges Signal an den zweiten Klangsteller (80) abgibt, mittels dem durch den zweiten Klangsteller (80) eine Einstellung einer Lautstärke und/oder von Klangeigenschaften der von der Tonwiedergabevorrichtung (65) wiederzugebenden Audiosignale erfolgt.

10. Audiogerät (50) nach einem der Ansprüche 5 bis 9, **dadurch gekennzeichnet, daß** der Sender (40) und/oder der Empfänger (35) in einem optischen Frequenzbereich, vorzugsweise im Infrarot-Bereich, betreibbar sind.

11. Audiogerät (50) nach einem der Ansprüche 5 bis 9, **dadurch gekennzeichnet, daß** der Sender (40) und/oder der Empfänger (35) in einem Funkfrequenzbereich betreibbar sind.

12. Tonwiedergabevorrichtung (25), insbesondere Kopfhörer, zur Durchführung des Verfahrens nach einem der Ansprüche 1 bis 4, mit einem Empfänger (45), über den drahtlos übertragene Audiosignale empfangbar sind, **dadurch gekennzeichnet, daß** eine Bedienvorrichtung (85) vorgesehen ist, über die eine Audiosignalquelle (1, 5, 10, 15) auswählbar ist und daß ein Sender (30) vorgesehen ist, von dem ein Signal in Abhängigkeit der an der Bedienvorrichtung (85) ausgewählten Audiosignalquelle (1, 5, 10, 15) abstrahlbar ist.

13. Tonwiedergabevorrichtung (25) nach Anspruch 12, **dadurch gekennzeichnet, daß** an der Bedienvorrichtung (85) Lautstärke- und Klangeinstellungen der zu empfangenden Audiosignale auswählbar sind und daß das von dem Sender (30) abstrahlbare Signal Informationen über die an der Bedienvorrichtung (85) ausgewählten Lautstärke- und Klangeinstellungen enthält.

14. Tonwiedergabevorrichtung (25) nach Anspruch 12 oder 13, **dadurch gekennzeichnet, daß** der Sender (30) und/oder der Empfänger (45) in einem optischen Frequenzbereich, vorzugsweise im Infrarot-Bereich, betreibbar sind.

15. Tonwiedergabevorrichtung (25) nach Anspruch 12 oder 13, **dadurch gekennzeichnet, daß** der Sender (30) und/oder der Empfänger (45) in einem Funkfrequenzbereich betreibbar sind.

16. Tonwiedergabevorrichtung (25) nach einem der Ansprüche 12 bis 15, **dadurch gekennzeichnet, daß** die Bedienvorrichtung (85) von der Tonwiedergabevorrichtung (25) absetzbar ist.

## Claims

1. Method for wirelessly transmitting audio signals between at least one audio signal source (1, 5, 10, 15) associated with an audio appliance (50) and an audio reproduction apparatus (25) which is remote from the audio appliance (50), where a transmitter (30) associated with the audio reproduction apparatus (25) radiates signals to a receiver (35) associated with the audio appliance (50), **characterized in that**, on the basis of the information contained in the signals, the at least one audio signal source (1, 5, 10, 15) is connected to a further transmitter (40), and **in that** the audio signals from the at least one audio signal source (1, 5, 10, 15) are radiated from the further transmitter (40) to a receiver (45) associated with the audio reproduction apparatus (25).

2. Method according to Claim 1, **characterized in that** the signals and/or the audio signals are transmitted optically, preferably in the infrared range, between the at least one audio signal source (1, 5, 10, 15) and the audio reproduction apparatus (25).

3. Method according to Claim 1, **characterized in that** the signals and/or the audio signals are transmitted by radio between the at least one audio signal source (1, 5, 10, 15) and the audio reproduction apparatus (25).

4. Method according to one of Claims 1, 2 or 3, **characterized in that** a volume and/or tone properties for the audio signals to be radiated from the further transmitter (40) are prescribed on the basis of the information contained in the signals.

5. Audio appliance (50), preferably car radio, for carrying out the method according to one of Claims 1 to 4, having a switching apparatus (55) and audio signal sources (1, 5, 10, 15), **characterized in that** a transmitter (40) is provided, **in that** the switching apparatus (55) can be used to connect a respective one of the audio signal sources (1, 5, 10, 15) to the transmitter (40), so that the audio signals from this audio signal source (1, 5, 10, 15) can be radiated from the transmitter (40), and **in that** a receiver (35) is provided which sets a switch position for the switching apparatus (55) on the basis of information contained in received signals.

6. Audio appliance (50) according to Claim 5, **characterized in that** at least one further switching apparatus (60) and an audio reproduction apparatus (65) are provided, and **in that** the audio reproduction apparatus (65) can be connected to a respective one of the audio signal sources (1, 5, 10, 15) by means of the further switching apparatus (60).

7. Audio appliance (50) according to Claim 5 or 6, **characterized in that** a control unit (70) is provided on which the switch position for the further switching apparatus (60) is set.

8. Audio appliance according to Claim 5, 6 or 7, **characterized in that** a first tone control (75), connected upstream of the transmitter (40), is provided, and **in that** the receiver (35) outputs a signal derived from the information contained in the received signals to the first tone control (75), and the first tone control (75) uses said signal to set a volume and/or tone properties for the audio signals to be radiated from the transmitter (40).

9. Audio appliance (50) according to one of Claims 5 to 8, **characterized in that** a second tone control (80), connected upstream of the audio reproduction apparatus (65), is provided, and **in that** the control unit (70) outputs a signal which is dependent on volume and tone settings prescribed at the control unit (70) to the second tone control (80), and the second tone control (80) uses said signal to set a volume and/or tone properties for the audio signals to be reproduced by the audio reproduction apparatus (65).

10. Audio appliance (50) according to one of Claims 5 to 9, **characterized in that** the transmitter (40) and/or the receiver (35) can be operated in an optical frequency range, preferably in the infrared range.

11. Audio appliance (50) according to one of Claims 5 to 9, **characterized in that** the transmitter (40) and/or the receiver (35) can be operated in a radio-frequency range.

12. Audio reproduction apparatus (25), in particular headphones, for carrying out the method according to one of Claims 1 to 4, having a receiver (45) which can be used to receive audio signals transmitted wirelessly, **characterized in that** a control apparatus (85) is provided which can be used to select an audio signal source (1, 5, 10, 15), and **in that** a transmitter (30) is provided from which a signal can be radiated on the basis of the audio signal source (1, 5, 10, 15) selected at the operating apparatus (55).

13. Audio reproduction apparatus (25) according to Claim 12, **characterized in that** the control apparatus (85) can be used to select volume and tone settings for the audio signals to be received, and **in that** the signal which can be radiated from the transmitter (30) contains information about the volume and tone settings selected at the control apparatus (85).

14. Audio reproduction apparatus (25) according to Claim 12 or 13, **characterized in that** the transmitter (30) and/or the receiver (45) can be operated in an optical frequency range, preferably in the infrared range.

15. Audio reproduction apparatus (25) according to Claim 12 or 13, **characterized in that** the transmitter (30) and/or the receiver (45) can be operated in a radio-frequency range.

16. Audio reproduction apparatus (25) according to one of Claims 12 to 15, **characterized in that** the control apparatus (85) can be removed from the audio reproduction apparatus (25).

## Revendications

1. Procédé de transmission sans fil de signaux audio entre au moins une source de signaux audio (1, 5, 10, 15) d'un appareil audio (50) et un dispositif de reproduction de son (25) séparé de l'appareil audio (50), un émetteur (30) du dispositif de reproduction de son (25) émettant les signaux à un récepteur (35) de l'appareil audio (50),
**caractérisé en ce qu'**
en fonction des informations contenues dans les signaux, au moins la source de signaux audio (1, 5, 10, 15) est reliée à un autre émetteur (40), et les signaux audio d'au moins la source de signaux audio (1, 5, 10, 15) de l'autre émetteur (40) sont émis vers un récepteur (45) du dispositif de reproduction sonore (25).

2. Procédé selon la revendication 1,
**caractérisé en ce que**
les signaux et/ou les signaux audio sont transmis de manière optique de préférence dans le domaine infrarouge entre au moins la source de signaux audio (1, 5, 10, 15) et le dispositif de reproduction de son (25).

3. Procédé selon la revendication 1,
**caractérisé en ce que**
les signaux et/ou les signaux audio sont transmis par radio entre au moins la source de signaux audio (1, 5, 10, 15) et le dispositif de reproduction de son (25).

4. Procédé selon l'une quelconque des revendications 1, 2, 3,
**caractérisé en ce qu'**
en fonction des informations contenues dans les signaux, un niveau sonore et/ou une sonorité sont prédéterminés pour les signaux audio émis par l'autre émetteur (40).

5. Appareil audio (50) de préférence autoradio pour la mise en oeuvre du procédé selon l'une quelconque des revendications 1 à 4, comprenant un dispositif de commutation (55) et des sources de signaux audio (1, 5, 10, 15),
**caractérisé par**
un émetteur (40) qui peut être relié par le dispositif de commutation (55) chaque fois à l'une des sources de signaux audio (1, 5, 10, 15) avec l'émetteur (40) de sorte que les signaux audio de cette source de signaux audio (1, 5, 10, 15) soient émis par l'émetteur (40), et
un récepteur (35) qui, en fonction des informations contenues dans les signaux reçus, réalise un réglage du dispositif de commutation (55).

6. Appareil audio (50) selon la revendication 5,
**caractérisé par**
au moins un autre dispositif de commutation (60) et un dispositif de reproduction sonore (65), le dispositif de reproduction sonore (65) étant relié par l'autre dispositif de commutation (60) à chaque fois l'une des sources de signaux audio (1, 5, 10, 15).

7. Appareil audio (50) selon l'une quelconque des revendications 5 ou 6,
**caractérisé par**
une pièce de commande (70) qui règle la position de commutation de l'autre dispositif de commutation (60).

8. Appareil audio (50) selon l'une quelconque des revendications 5, 6, ou 7,
**caractérisé par**
un premier organe de réglage de sonorité (75) en amont de l'émetteur (40), le récepteur (35) fournissant un signal déduit des informations contenues dans les signaux reçus vers le premier organe de réglage de sonorité (75), signal à l'aide duquel le premier organe de réglage de sonorité (75) règle le volume sonore et/ou la sonorité des signaux audio destiné à être émis par l'émetteur (40).

9. Appareil audio (50) selon l'une quelconque des revendications 5 à 8,
**caractérisé par**
un second organe de réglage de sonorité (80) en amont du dispositif de reproduction sonore (50), et
la pièce de commande (70) émet vers le second organe de réglage de sonorité (80), un signal dépendant des réglages de niveau sonore et de sonorité prédéterminés sur le dispositif de commande (70), signal à l'aide duquel le second organe de réglage de sonorité (80) règle le niveau sonore et/ou la sonorité des signaux audio à reproduire par le dispositif de reproduction sonore (65).

10. Appareil audio (50) selon l'une quelconque des revendications 5 à 9,
**caractérisé en ce que**
l'émetteur (40) et/ou le récepteur (35) fonctionnent dans une plage de fréquences optiques de préférence dans le domaine infrarouge.

11. Appareil audio (50) selon l'une quelconque des revendications 5 à 9,
**caractérisé en ce que**
l'émetteur (40) et/ou le récepteur (35) fonctionnent dans le domaine des fréquences radio.

12. Dispositif de reproduction sonore (25) notamment casque d'écoute pour la mise en oeuvre du procédé selon l'une quelconque des revendications 1 à 4, comprenant un récepteur (45) qui reçoit des signaux audio par transmission sans fil,
**caractérisé par**
un dispositif de commande (85) permettant de sélectionner l'une des sources de signaux audio (1, 5, 10, 15), et
un émetteur (30) qui émet un signal en fonction de la source de signaux audio (1, 5, 10, 15) sélectionné par le dispositif de commande (85).

13. Dispositif de reproduction sonore (25) selon la revendication 12,
**caractérisé en ce que**
le dispositif de commande (85) permet de sélectionner les réglages de volume sonore et de sonorité des signaux audio à recevoir, et
le signal émis par l'émetteur (30) contient des informations concernant les réglages de volume sonore et de sonorité sélectionnées par le dispositif de commande (85).

14. Dispositif de reproduction sonore (25) selon l'une quelconque des revendications 12 ou 13,
**caractérisé en ce que**
l'émetteur (30) et/ou le récepteur (45) fonctionnent dans une plage de fréquences optiques notamment dans le domaine infrarouge.

15. Dispositif de reproduction sonore (25) selon l'une quelconque des revendications 12 ou 13,
**caractérisé en ce que**
l'émetteur (30) et/ou le récepteur (45) fonctionnent dans la plage des fréquences radio.

16. Dispositif de reproduction sonore (25) selon l'une quelconque des revendications 12 à 15,
**caractérisé en ce que**
le dispositif de commande (85) peut être détaché du dispositif de reproduction sonore (25).
